# EUROPEAN PATENT SPECIFICATION

(11) **EP 2 466 877 B1**
(45) Date of publication and mention of the grant of the patent: **24.04.2013**
(21) Application number: 10195261.2
(22) Date of filing: 15.12.2010
(51) Int. Cl.: H04N 7/01, H04N 5/46

(54) **A method and a system for detecting uniform stripes in a digital video frame**
Verfahren und System zur Erfassung gleichmäßiger Streifen in einem digitalen Videorahmen
Procédé et système de détection des bandes uniformes dans un cadre vidéo numérique

(43) Date of publication of application: 20.06.2012
(73) Proprietor: Advanced Digital Broadcast S.A., 1292 Chambesy (CH)
(72) Inventor: Hrebien, Maciej, 65-119 Poland (PL); Kobzda, Piotr, 65-119 Poland (PL)
(74) Representative: Pawlowski, Adam

(56) References cited:
- US-A- 5 760 840
- US-A1- 2005 094 033

## Description

The present invention relates to detecting uniform stripes in a digital video frame, in particular a stereoscopic video frame.

It is a known technique to transmit a video stream comprising frames of a constant, standardized size, wherein the contents of the frame are surrounded and/or divided by horizontal and/or vertical stripes, usually black, also called blank areas, the size of which depends on the size of the actual video content transmitted.

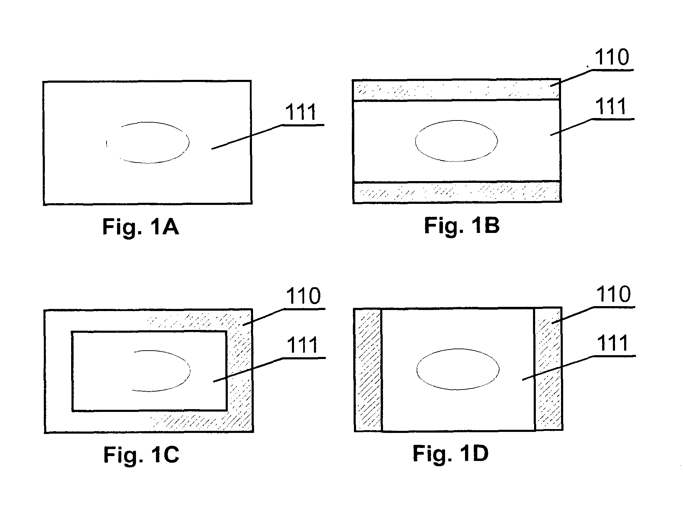

Fig. 1A-1D show examples of typical 2D video frames. The frame may comprise only an active image region 111 as shown in Fig. 1A. Alternatively, the 2D frame may further comprise a non-active image region 110, such as stripes of a uniform color, e.g. black, at the top and bottom edges of the frame as shown in Fig. 1B or stripes at the top, bottom, left and right edges of the frame as shown in Fig. 1C or stripes at the left and right edges of the frame as shown in Fig. 1D.

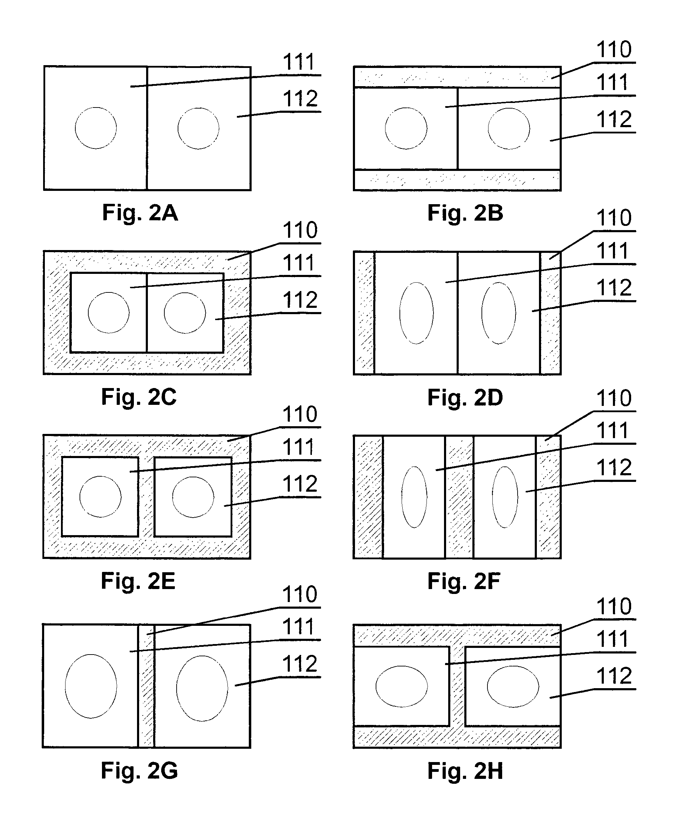

Figs. 2A-2H show examples of typical 3D video frames of a Left-Right (LR) type. Such frame, as shown in Fig. 2A, comprises two active image regions 111, 112, which define the content to be displayed for the left and right eye. The active regions 111, 112 may be scaled-down in the horizontal direction in order to fit into dimensions of a standardized 2D frame. A 3D frame may also contain non-active image regions 110, such as stripes of a uniform color, e.g. black, at the top and bottom edges of the frame as shown in Fig. 2B, at the top, bottom, left and right edges of the frame as shown in Fig. 2C, at the left and right edges of the frame as shown in Fig. 2D, at the top, bottom, left and right edges of the frame and between the active regions as shown in Fig. 2E, at the left and right edges of the frame and between the active regions as shown in Fig. 2F, between the active regions as shown in Fig. 2G or at the top and bottom edges of the frame and between the active regions as shown in Fig. 2H.

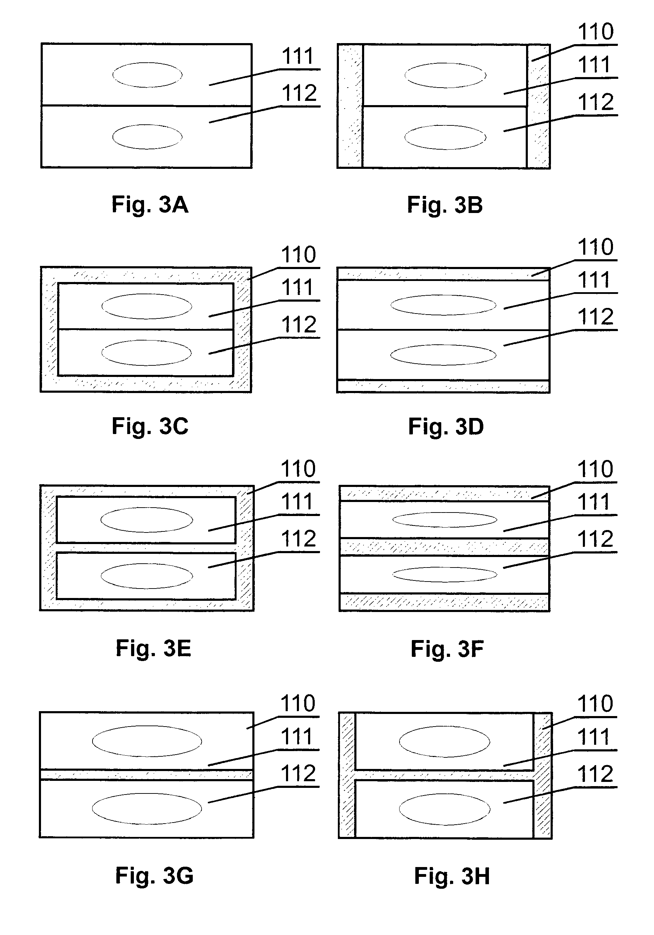

Figs. 3A-3H show examples of typical 3D video frames of a Top-Bottom (TB) type. Such frame, as shown in Fig. 3A, comprises two active image regions 111, 112, which define the content to be displayed for the left (e.g. the top region) and the right (e.g. the bottom region) eye. The active regions 111, 112 may be scaled-down in the vertical direction in order to fit into dimensions of a standard 2D frame. A 3D frame may also contain non-active image regions 110, such as: stripes of a uniform color, e.g. black, at the left and right edges of the frame as shown in Fig. 3B, at the top, bottom, left and right edges of the frame as shown in Fig. 3C, at the top and bottom edges of the frame as shown in Fig. 3D, at the top, bottom, left and right edges of the frame and between the active regions as shown in Fig. 3E, at the top and bottom edges of the frame and between the active regions as shown in Fig. 3F, between the active regions as shown in Fig. 3G or at the left and right edges of the frame and between the active regions as shown in Fig. 3H.

In order to appropriately display the frames, in particular the 3D frames, wherein the contents of the L (or T) and R (or B) frame are to be displayed independently, it is desirable to properly detect the stripes within the video frame.

A US patent application US2005/094033 presents a method and system for automatic aspect ratio detection and may comprise scanning lines in at least a selected portion of an image and locating a first reference pixel in one of the scanned lines. A corresponding sliding sum and a sliding number may be generated starting from the first reference pixel and a white edge determined based on the generated sliding sum and/or the generated sliding number. The method involves calculation of luma sum of a row or column and comparison whether the sum is less than a threshold to detect black lines or comparison whether the sum is higher than a threshold to detect white lines. Therefore, the method of allows to detect black or white frames only.

The aim of the present invention is to provide a method for detecting uniform stripes in digital video frames, which is efficient and requires little processing power.

The object of the invention is a method for detecting uniform stripes in a digital video frame, comprising the steps of defining at least one pair of regions of the digital video frame, each region comprising a number of elements, wherein the elements constitute rows or columns, processing the elements of the pair of regions in opposite directions by comparing a sum of values of pixels of the processed element with a sum reference value in the direction of processing to obtain a difference value, until the difference value for the processed elements in both regions is not larger than a predetermined threshold, designating the processed elements of the pair of regions as uniform stripes.

The pair of regions may comprise a pair of a plurality of columns or rows adjacent to the frame borders, wherein the elements are processed starting from the elements adjacent to the frame borders in a direction towards the frame centre.

The pair of regions may comprise a pair of a plurality of columns or rows adjacent to the frame centre, wherein the elements are processed starting from the elements adjacent to the frame centre in a direction towards the frame borders.

The predetermined threshold can be different from zero.

The values of pixels may represent a single component of the color model of pixels.

The values of pixels can be determined as an absolute value of a difference between an actual value of a pixel and a pixel reference value.

The pixel reference value can be the actual value of the first pixel of the region.

The sum reference value can be a sum of pixel values of a preceding element of the region in the direction of processing.

The sum reference value can be a sum of pixel values of the first element of the video frame.

The object of the present invention is also a method for processing a digital video frame to discard uniform stripes, comprising the steps of detecting uniform stripes in the digital video frame using the method according to the invention and processing the digital video frame to discard the detected uniform stripes only if the size of the detected uniform stripes is smaller than the size of the regions.

Another object of the present invention is a computer program comprising program code means for performing all the steps of the method according to the invention when said program is run on a computer, as well as a computer readable medium storing computer-executable instructions performing all the steps of the method according to the invention when executed on a computer.

The object of the invention is also a system for detecting uniform stripes in a digital video frame, comprising a frame memory configured to read the digital video frame, a pair of selectors configured to read elements of a pair of regions of the frame stored in the frame memory, wherein the elements constitute rows or columns, a pair of adders configured to calculate a sum of values of pixels of the elements read by the selectors, a pair of buffers configured to store a sum reference value, a pair of comparators, each connected to a different one of the adders and a different one of the buffers configured to compare the sums calculated by the adders with the sum reference values stored in the buffers to obtain a difference value, wherein the controller is configured to control the selectors to read consecutive elements of a pair of regions in opposite directions until both difference values output from the comparators are not larger than a predetermined threshold.

The buffers can be configured to store the sum output from the adders for the first element.

The buffers can be configured to store the sum output from the adders for the previously compared element.

The invention is shown by means of exemplary embodiment on a drawing, in which:
Figs. 1A-1D show examples of typical 2D video frames.
Figs. 2A-2H show examples of typical 3D video frames of an Left-Right (LR) type.
Figs. 3A-3H show examples of typical 3D video frames of a Top-Bottom (TB) type.
Fig. 4 shows a plot of sums of elements of rows and columns of a video frame.
Fig. 5 presents a procedure according to the invention as a flow diagram.
Fig. 6 presents a procedure for processing a digital video frame to discard the uniform stripes
Fig. 7 presents a system for carrying out the method according to the invention.

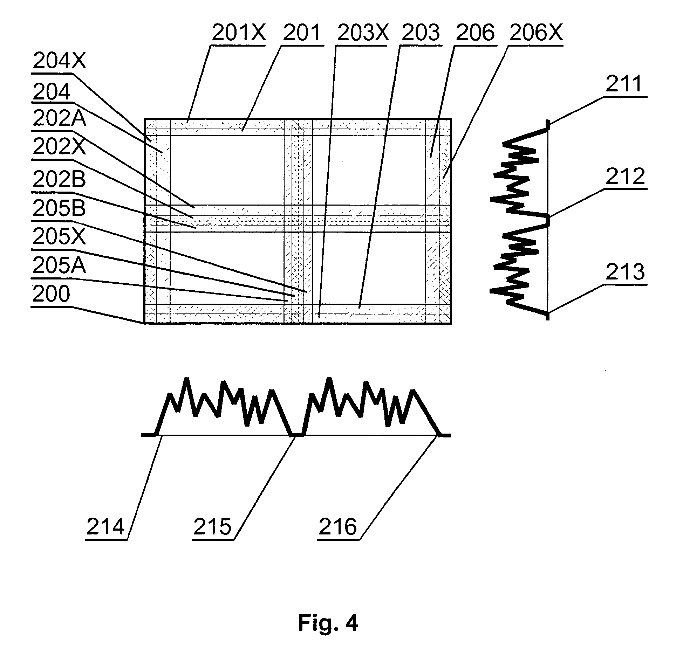

Fig. 4 presents a video frame 200, which comprises six regions 201-206, in which uniform stripes of interest to the present invention may occur, namely horizontal stripes 201 X, 203X at the borders of the frame, a horizontal stripe 202X at the centre of the frame, vertical stripes 204X, 206X at the borders of the frame and a vertical stripe 205X at the centre of the frame. The present invention utilizes the fact that the stripes can be interpreted to occupy pairs of regions symmetric with respect to the centre of the frame: either regions adjacent to the frame borders (in case of stripes 201, 203, 204, 206) or regions adjacent to the centre of the frame and to each other (in case of stripes 202 ― regions 202A, 202B, 205 ― regions 205A, 205B). In case of vertical stripes, the regions comprise a number of vertical columns, wherein in case of horizontal stripes, the regions comprise a number of vertical rows. The rows or columns will be referred to as region elements.

For each element, a sum of values of pixels forming the element can be calculated. The pixel values can represent a specific property of the pixel, such as a value of a single component of a color model (such as a specific color or luminance), or a plurality of color components. By calculating only a single component of the color model, the number of computations are limited. For two identical elements, such as two rows or columns of identical color, the sum of pixel values will be the same. For example, for an element comprising only black pixels, for which the value of luminance is zero, the sum of values of pixel elements is zero provided that the chrominance values are not taken into account.

The pixel values can be also determined as an absolute value of a difference between an actual value of a pixel and a pixel reference value. The pixel reference value can be a default value, such as zero, or actual value of the value of the first pixel of the region (e.g. the pixel of the top left corner of the frame or the top pixel of the centre of the frame). Alternatively, the pixel reference value may be a mean value for all pixels in the first element of the region. In such a case, the sum of pixel values of an element will be zero only for elements comprising all pixels which have the same value as the reference pixel value.

An exemplary plot of sums of pixel values for rows and columns of the frame shown in Fig. 4 is shown next to the frame. The flat portions 211-216 correspond to the uniform stripes 201X-206X, while the serrated portions therebetween represent active content within the frame.

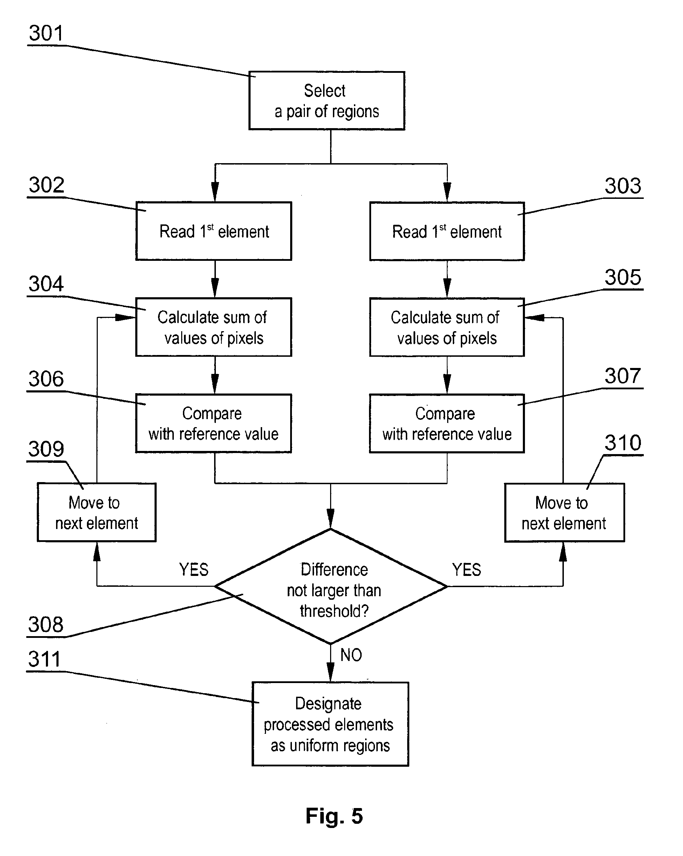

Fig. 5 presents a procedure according to the invention as a flow diagram. In step 301, at least one pair of regions is defined, each region comprising a number of elements, wherein the elements constitute rows or columns. The regions may comprise pair of a plurality of columns or rows adjacent to the frame borders or adjacent to the frame centre. In steps 302 and 303 the first element of each region is read, i.e. an element adjacent to the frame border or the frame centre. Next, in steps 304 and 305 for the processed element a sum of values of pixels is calculated. In steps 306 and 307 the calculated sum is compared with a sum reference value.

In one example, the sum reference value may be a sum of pixels of the preceding element in the direction of processing, which allows detecting stripes of uniform color at both frame borders.

In another example, the sum reference value may be a sum of pixels of the first element of the image, i.e. the first row or the first column, depending on the type of elements of which the regions are composed of. This allows detecting stripes of the same color as the first element of the frame.

The sum reference value may be also the value of the first pixel of the frame multiplied by the number of pixels of the element of the frame.

In step 308 it is checked whether the difference value for the processed elements in both regions is not larger than a threshold value. The threshold value may be set to zero, which allows detecting perfectly uniform regions. The threshold value may be different than zero, in order to filter-out noise related to lossless compression of the frames or supplementary information that could be coded in the frame by assigning a specific value to some of the pixels. The threshold value may be a constant or may be adapted for each specific frame. For example, the threshold value may be adapted to contents of frame (analyzed by another procedure) or to a compression ratio for the frame (higher compression ratio may lead to necessity to use higher threshold, as artifacts may appear at the uniform stripes).

In case the difference values do not exceed the threshold, the procedure moves to the next elements of the regions in steps 309 and 310. The order of processing of elements in the pair of regions is opposite. Namely, if the pair of regions is adjacent to the frame borders, the elements are processed starting from the elements adjacent to the frame borders in a direction towards the frame centre. On the other hand, if the pair of regions is adjacent to the frame centre, the elements are processed starting from the elements adjacent to the frame centre in a direction towards the frame borders.

In case at least one difference value exceeds the threshold, the procedure is stopped and only the elements of the regions processed so far are designated as uniform stripes.

By simultaneously processing symmetrical regions of the frame, the procedure is immune to a situation wherein only one uniform stripe would be present in the frame, which would be most likely an element of the frame contents rather than a uniform stripe surrounding active content of the 2D or 3D frames as shown in Figs. 1-3.

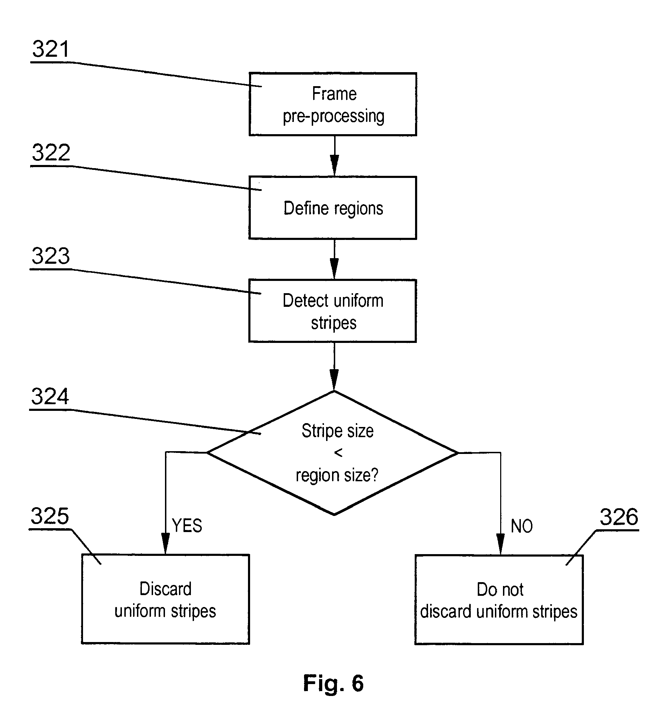

Fig. 6 presents a procedure for processing a digital video frame to discard the uniform stripes, in order to display the frame properly on a screen. For example, in case of 2D video frames the frame can be enlarged to full screen size. In case of 3D video frames in e.g. a LR-type format, the stripes are discarded to extract only the active information in the stereo pair of frames. First, in step 321 the frame can be pre-processed in order to simplify further processing. For example, only the luminance component of the frame can be extracted. Furthermore, the size of the frame can be decreased, for example by scaling it down 2 or more times. Next, in step 322 the regions are defined by specifying the range of columns or rows to be processed. The range may depend on the size of the frame, for example the width or height of the regions may be defined as 20% of the respective width or height of the frame. Next, in step 323 the uniform stripes are detected using the algorithm of Fig. 5. Then it is checked in step 324 whether the size of uniform stripes detected is smaller than the size of the region which was analyzed. If so, the contents of the uniform region are discarded in step 325 and only the active portion of the frame is passed for further processing leading to display of the frame. If the size of uniform stripe detected is equal to the size of the region, this may indicate that most of the frame contents are blank and the stripes should not be cropped, as this might disrupt the display of the frame ― for example, in a video movie when the closing credits are displayed ― in such a case, the stripes are not discarded in step 326 and the whole frame is sent to be displayed.

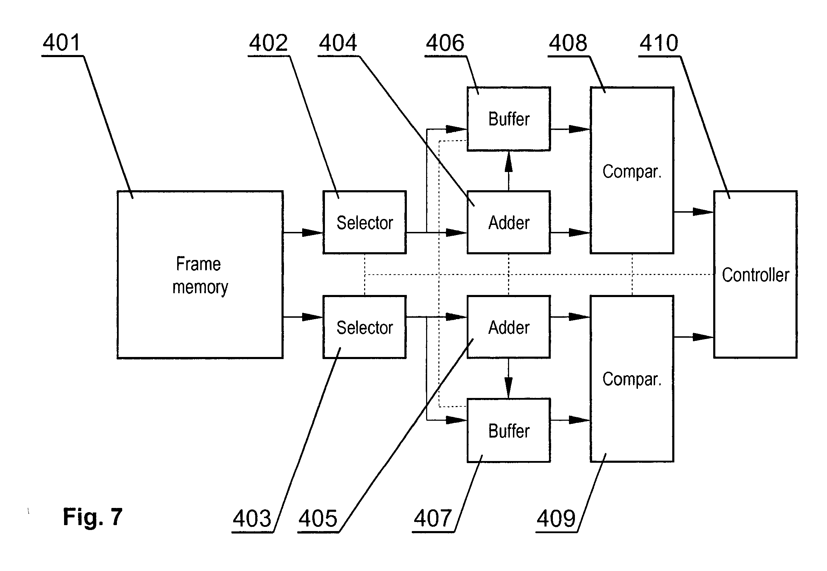

Fig. 7 presents a system for carrying out the method according to the invention. A frame memory 401 receiving frames of a video signal is coupled to a pair of selectors 402 for reading individual elements of the frame regions in the order controlled by a controller 403. Adders 404, 405 are configured to calculate the sums of pixels of individual elements. Comparators 408, 409 compare the difference between the outputs of the adders 404, 405 and outputs of buffers 406, 407 storing a sum reference value. In case the buffers 406, 407 store a sum of pixels of a preceding element of the region, the buffers read the value from the output of the adders 404, 405 after the comparison is finished, i.e. read the sum output from the adders 404, 405 for the previously compared element, in order to use it as a sum reference for the next comparison operation. The buffers 406, 407 may be also configured to store the sum output from the adders 404, 405 or from the first adder 404 only, for the first element of the region. The outputs of comparators are connected to the controller 410 configured to define the uniform stripes and to control operation of the other blocks of the system.

It can be easily recognized, by one skilled in the art, that the aforementioned system and method for detecting uniform stripes in digital video frames may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for detecting pairs of uniform stripes in a digital video frame representing a digital video television signal, comprising the steps of:
- defining a pair of distinct regions ((201, 203); (204, 206); (202A, 202B); (205A, 205B)) within the digital video frame, each region (201, 202A, 202B, 203, 204, 205A, 205B, 206) comprising a number of elements, wherein the elements of both regions constitute either rows or columns,
**characterized by**
- processing the elements of the pair of regions ((201, 203); (204, 206); (202A, 202B); (205A, 205B)) in opposite directions by comparing a sum of values of pixels of the processed element with a sum reference value to obtain a difference value, wherein the sum reference value is a sum of pixel values of the first or of a preceding element of the region in one of the directions of processing,
- until the difference value for the processed elements in both regions ((201, 203); (204, 206); (202A, 202B); (205A, 205B)) is not larger than a predetermined threshold,
- designating the processed elements of the pair of regions ((201, 203); (204, 206); (202A, 202B); (205A, 205B)) as uniform stripes ((201 X, 203X); (204X, 206X); (202X); (205X)).

2. The method according to claim 1, wherein the pair of regions ((201, 203); (204, 206)) comprises a pair of a plurality of columns or rows adjacent to the frame borders, wherein the elements are processed starting from the elements adjacent to the frame borders in a direction towards the frame centre.

3. The method according to claim 1, wherein the pair of regions ((202A, 202B); (205A, 205B)) comprises a pair of a plurality of columns or rows adjacent to the frame centre, wherein the elements are processed starting from the elements adjacent to the frame centre in a direction towards the frame borders.

4. The method according to any of previous claims, wherein the predetermined threshold is different from zero.

5. The method according to any of previous claims, wherein the values of pixels represent a single component of the color model of pixels.

6. The method according to any of previous claims, wherein the values of pixels are determined as an absolute value of a difference between an actual value of a pixel and a pixel reference value.

7. The method according to claim 6, wherein the pixel reference value is the actual value of the first pixel of the region.

8. A method for processing a digital video frame to discard uniform stripes, comprising the steps of:
- detecting uniform stripes ((201X, 203X); (204X, 206X); (202X); (205X)) in the digital video frame using the method according to any of claims 1-7,
- processing the digital video frame to discard the detected uniform stripes only if the size of the detected uniform stripes ((201X, 203X); (204X, 206X); (202X); (205X)) is smaller than the size of the regions ((201, 203); (204, 206); (202A, 202B); (205A, 205B)).

9. A computer program comprising program code means for performing all the steps of the method according to any of claims 1-8 when said program is run on a computer.

10. A computer readable medium storing computer-executable instructions performing all the steps of the method according to any of claims 1-8 when executed on a computer.

11. A system for detecting pairs of uniform stripes in a digital video frame representing a digital video television signal, **characterized in that** it comprises:
- a frame memory (401) configured to read the digital video frame,
- a pair of selectors (402, 403) configured to read elements of a pair of distinct regions ((201, 203); (204, 206); (202A, 202B); (205A, 205B)) of the frame stored in the frame memory (401), wherein the elements of both regions constitute either rows or columns,
- a pair of adders (404, 405) configured to calculate a sum of values of pixels of the elements read by the selectors (402, 403),
- a pair of buffers (406, 407) configured to store a sum reference value,
- a pair of comparators (408, 409), each connected to a different one of the adders (404, 405) and a different one of the buffers (406, 407) configured to compare the sums calculated by the adders (404, 405) with the sum reference values stored in the buffers (406, 407) to obtain a difference value, wherein the sum reference value is a sum of pixel values of the first or of a preceding element of the region in one of the directions of processing,
- wherein the controller (410) is configured to control the selectors (402, 403) to read consecutive elements of a pair of regions ((201, 203); (204, 206); (202A, 202B); (205A, 205B)) in opposite directions until both difference values output from the comparators (408, 409) are not larger than a predetermined threshold.

12. The system according to claim 11, wherein the buffers (406, 407) are configured to store the sum output from the adders (404, 405) for the first element.

13. The system according to claim 11, wherein the buffers (406, 407) are configured to store the sum output from the adders (404, 405) for the previously compared element.

## Patentansprüche

1. Verfahren zum Erfassen von Paaren gleichmäßiger Streifen in einem digitalen Videoframe, der ein digitales Videofernsehsignal repräsentiert, welches die Schritte umfasst:
- Definieren eines Paars von bestimmten Bereichen ((201, 203); (204, 206); (202A, 202B); (205A, 205B)) innerhalb des digitalen Videoframes, wobei jeder Bereich (201, 202A, 202B, 203, 204, 205A, 205B, 206) eine Anzahl von Elementen aufweist, wobei die Elemente beider Bereiche entweder Reihen oder Spalten darstellen,
**gekennzeichnet durch**
- Bearbeiten der Elemente des Paars von Bereichen ((201, 203); (204, 206); (202A, 202B); (205A, 205B)) in entgegengesetzte Richtungen durch Vergleich einer Summe von Werten von Pixeln des bearbeiteten Elements mit einem Summenreferenzwert zum Erhalt eines Differenzwerts, wobei der Summenreferenzwert eine Summe von Pixelwerten des ersten oder eines vorangehenden Elements des Bereichs in einer der Bearbeitungsrichtungen ist,
- bis der Differenzwert für die bearbeiteten Elemente in beiden Bereichen ((201, 203); (204, 206); (202A, 202B); (205A, 205B)) nicht größer als ein vorbestimmter Schwellenwert ist,
- Designieren der bearbeiteten Elemente des Paars von Bereichen ((201, 203); (204, 206); (202A, 202B); (205A, 205B)) als gleichmäßige Streifen ((201 X, 203X); (204X, 206X); (202X); (205X)).

2. Das Verfahren nach Anspruch 1, worin das Paar von Bereichen ((201, 203); (204, 206)) ein Paar einer Mehrzahl von Spalten oder Reihen benachbart den Framerändern aufweist, worin die Elemente ausgehend von den Elementen, die den Framerändern benachbart sind, in Richtung zu der Framemitte hin bearbeitet werden.

3. Das Verfahren nach Anspruch 1, worin das Paar von Bereichen ((202A, 202B), (205A, 205B) ein Paar einer Mehrzahl von Spalten oder Reihen benachbart der Framemitte aufweist, worin die Elemente ausgehend von den Elementen, die der Framemitte benachbart sind, in Richtung zu den Framerändern hin bearbeitet werden.

4. Das Verfahren nach einem der vorhergehenden Ansprüche, worin der vorbestimmte Schwellenwert von Null unterschiedlich ist.

5. Das Verfahren nach einem der vorhergehenden Ansprüche, worin die Werte von Pixeln eine einzelne Komponente des Farbmodells von Pixeln repräsentieren.

6. Das Verfahren nach einem der vorhergehenden Ansprüche, worin die Werte der Pixel als Absolutwert eine Differenz zwischen einem aktuellen Wert eines Pixels und einem Pixelreferenzwert bestimmt werden.

7. Das Verfahren nach Anspruch 6, worin der Pixelreferenzwert der aktuelle Wert des ersten Pixels des Bereichs ist.

8. Verfahren zum Bearbeiten eines digitalen Videoframes zum Verwerfen von gleichmäßigen Streifen, welches die Schritte umfasst:
- Erfassen von gleichmäßigen Streifen ((201 X, 203X); (204X, 206X); (202X); (205X)) in dem digitalen Videoframe unter Verwendung des Verfahrens nach einem der Ansprüche 1 bis 7,
- Bearbeiten des digitalen Videoframes zum Verwerfen der erfassten gleichmäßigen Streifen nur dann, wenn die Größe der erfassten gleichmäßigen Streifen ((201 X, 203X); (204X, 206X); (202X); (205X)) kleiner als die Größe der Bereiche ((201, 203); (204, 206); (202A, 202B); (205A, 205B)) ist.

9. Computerprogramm, das Programmcodemittel aufweist, um alle Schritte des Verfahrens nach einem der Ansprüche 1 bis 8 durchzuführen, wenn das Programm auf einem Computer läuft.

10. Computerlesbares Medium, das Computer-ausführbare Anweisungen speichert, die alle Schritte des Verfahrens nach einem der Ansprüche 1 bis 8 durchführen, wenn sie auf einem Computer ausgeführt werden.

11. System zum Erfassen von Paaren gleichmäßiger Streifen in einem digitalen Videoframe, das ein digitales Videofernsehsignal repräsentiert, **dadurch gekennzeichnet, dass** es umfasst:
- einen Framespeicher (401), der konfiguriert ist, um den digitalen Videoframe zu lesen,
- ein Paar von Selektoren (402, 403), die konfiguriert sind, um Elemente eines Paars von bestimmten Bereichen ((201, 203); (204, 206); (202A, 202B); (205A, 205B)) des im Framespeicher (401) gespeicherten Frames zu lesen, worin die Elemente beider Bereiche entweder Reihen oder Spalten darstellen,
- ein Paar von Addierern (404, 405), die konfiguriert sind, um eine Summe von Werten von Pixeln der Elemente, die durch die Selektoren (402, 403) gelesen sind, zu berechnen,
- ein Paar von Puffern (406, 407), die konfiguriert sind, um einen Summenreferenzwert zu speichern,
- ein Paar von Komparatoren (408, 409), die jeweils mit einem anderen der Addierer (404, 405) und einem anderen der Puffer (406, 407) verbunden sind, konfiguriert zum Vergleichen der durch die Addierer (404, 405) berechneten Summen mit den in den Puffern (406, 407) gespeicherten Summenreferenzwerten, um einen Differenzwert zu erhalten, wobei der Summenreferenzwert die Summe von Pixelwerten des ersten oder eines vorangehenden Elements des Bereichs in einer der Bearbeitungsrichtungen ist,
- worin der Controller (410) konfiguriert ist, um die Selektoren (402, 403) anzusteuern, um aufeinander folgende Elemente eines Paars von Bereichen ((201, 203); (204, 206); (202A, 202B); (205A, 205B)) in entgegengesetzte Richtungen zu lesen, bis beide Differenzwerte, die von den Komparatoren (408, 409) ausgegeben werden, nicht größer als ein vorbestimmter Schwellenwert sind.

12. Das System nach Anspruch 11, worin die Puffer (406, 407) konfiguriert sind, um die Summe zu speichern, die von den Addierern (404, 405) für das erste Element ausgegeben wird.

13. Das System nach Anspruch 11, worin die Puffer (406, 407) konfiguriert sind, um die Summe zu speichern, die von den Addierern (404, 405) für das zuvor verglichene Element ausgegeben werden.

## Revendications

1. Procédé de détection de paires de rayures uniformes dans une trame vidéo numérique représentant un signal de télévision vidéo numérique, comprenant les étapes consistant à :
- définir une paire de régions distinctes ((201, 203) ; (204, 206) ; (202A, 202B) ; (205A, 205B)) au sein de la trame vidéo numérique, chaque région (201, 202A, 202B, 203, 204, 205A, 205B, 206) comprenant un certain nombre d'éléments, dans lequel les éléments des deux régions constituent soit des lignes, soit des colonnes,
**caractérisé par**
- le traitement des éléments de la paire de régions ((201, 203) ; (204, 206) ; (202A, 202B) ; (205A, 205B)) dans des directions opposées en comparant une somme de valeurs de pixels de l'élément traité à une valeur de référence de somme afin d'obtenir une valeur de différence, dans lequel la valeur de référence de somme est une somme de valeur de pixel du premier élément ou d'un élément précédent de la région dans une des directions de traitement,
- jusqu'à ce que la valeur de différence pour les éléments traités dans les deux régions ((201, 203) ; (204, 206) ; (202A, 202B) ; (205A, 205B)) ne soit pas plus grande qu'un seuil prédéterminé,
- la désignation des éléments traités de la paire de régions ((201, 203) ; (204, 206) ; (202A, 202B) ; (205A, 205B)) comme des rayures uniformes ((201X, 203X) ; (204X, 206X) ; (202X) ; (205X)).

2. Procédé selon la revendication 1, dans lequel la paire de régions ((201, 203) ; (204, 206)) comprend une paire d'une pluralité de colonnes ou de lignes adjacentes aux bordures de trame, dans lequel les éléments sont traités en commençant à partir des éléments adjacents aux bordures de trame dans une direction vers le centre de la trame.

3. Procédé selon la revendication 1, dans lequel la paire de régions ((202A, 202B) ; (205A, 205B)) comprend une paire d'une pluralité de colonnes ou de lignes adjacentes au centre de trame, dans lequel les éléments sont traités en commençant à partir des éléments adjacents au centre de trame dans une direction vers les bordures de trame.

4. Procédé selon l'une quelconque des revendications précédentes, dans lequel le seuil prédéterminé est différent de zéro.

5. Procédé selon l'une quelconque des revendications précédentes, dans lequel les valeurs de pixels représentent une seule composante du modèle de couleur de pixels.

6. Procédé selon l'une quelconque des revendications précédentes, dans lequel les valeurs de pixels sont déterminées comme une valeur absolue d'une différence entre une valeur réelle d'un pixel et une valeur de référence de pixel.

7. Procédé selon la revendication 6, dans lequel la valeur de référence de pixel est la valeur réelle du premier pixel de la région.

8. Procédé de traitement d'une trame vidéo numérique pour supprimer des rayures uniformes, comprenant les étapes consistant à :
- détecter des rayures uniformes ((201X, 203X) ; (204X, 206X) ; (202X, 205X)) dans la trame vidéo numérique en utilisant le procédé selon l'une quelconque des revendications 1 à 7,
- traiter la trame vidéo numérique pour supprimer les rayures uniformes détectées uniquement si la taille des rayures uniformes détectées ((201X, 203X) ; (204X, 206X) ; (202X, 205X)) est plus petite que la taille des régions ((201, 203) ; (204, 206) ; (202A, 202B) ; (205A, 205B)).

9. Programme informatique comprenant un moyen de code de programme permettant de réaliser toutes les étapes du procédé selon l'une quelconque des revendications 1 à 8 lorsque ledit programme est exécuté sur un ordinateur.

10. Support lisible par ordinateur stockant des instructions exécutables sur ordinateur réalisant toutes les étapes du procédé selon l'une quelconque des revendications 1 à 8 lorsqu'il est exécuté sur un ordinateur.

11. Système de détection de paires de rayures uniformes dans une trame vidéo numérique représentant un signal de télévision vidéo numérique, **caractérisé en ce qu'**il comprend :
- une mémoire de trame (401) configurée pour lire la trame vidéo numérique,
- une paire de sélectionneurs (402, 403) configurés pour lire des éléments d'une paire de régions distinctes ((201, 203) ; (204, 206) ; (202A, 202B) ; (205A, 205B)) de la trame stockée dans la mémoire de trame (401), dans lequel les éléments des deux régions constituent soit des lignes, soit des colonnes,
- une paire d'additionneurs (404, 405) configurés pour calculer une somme de valeurs de pixels des éléments lus par les sélectionneurs (402, 403),
- une paire de mémoires tampons (406, 407) configurées pour stocker une valeur de référence de somme,
- une paire de comparateurs (408, 409), chacun connecté à l'un différent des additionneurs (404, 405) et à l'une différente des mémoires tampons (406, 407) configurés pour comparer les sommes calculées par les additionneurs (404, 405) aux valeurs de référence de somme stockées dans les mémoires tampons (406, 407) afin d'obtenir une valeur de différence, dans lequel la valeur de référence de somme est une somme de valeurs de pixel du premier élément ou d'un élément précédent de la région dans l'une des directions de traitement,
- dans lequel l'unité de commande (410) est configurée pour commander les sélectionneurs (402, 403) pour qu'ils lisent des éléments consécutifs d'une paire de régions ((201, 203) ; (204, 206) ; (202A, 202B) ; (205A, 205B)) dans des directions opposées jusqu'à ce que deux valeurs de différence émises en sortie par les comparateurs (408, 409) ne soient pas plus grandes qu'un seuil prédéterminé.

12. Système selon la revendication 11, dans lequel les mémoires tampons (406, 407) sont configurées pour stocker la somme émise en sortie par les additionneurs (404, 405) pour le premier élément.

13. Système selon la revendication 11, dans lequel les mémoires tampons (406, 407) sont configurées pour stocker la somme émise en sortie par les additionneurs (404, 405) pour l'élément précédemment comparé.
